Europäisches Patentamt

**European Patent Office**

**Office européen des brevets**

(19)

(11) Publication number: **0 203 262**
A2

# EUROPEAN PATENT APPLICATION

(12)

(21) Application number: **86101694.7**

(22) Date of filing: **10.02.86**

(51) Int. Cl.⁴: **B 60 R 25/10, B 60 R 25/04**

(30) Priority: **28.05.85 US 737690**

(43) Date of publication of application: **03.12.86**
**Bulletin 86/49**

(84) Designated Contracting States: **AT BE CH DE FR GB IT LI LU NL SE**

(71) Applicant: **Arlasky, David, 2638 United Lane, Elk Grove Village Illinois 60007 (US)**

(72) Inventor: **Arlasky, David, 2638 United Lane, Elk Grove Village Illinois 60007 (US)**
Inventor: **Crites, Allan B., 1050 Carswell Avenue, Elk Grove Village Illinois 60007 (US)**

(74) Representative: **Brown, John David et al, FORRESTER & BOEHMERT Widenmayerstrasse 4/I, D-8000 München 22 (DE)**

(54) **Anti-theft system for a vehicle.**

(57) This disclosure relates to an anti-theft system for use in a vehicle having at least one anti-theft device such as an ignition suppressor and a siren alarm. The system comprises an infrared receiver unit adapted to be mounted within the passenger compartment of the vehicle, and a companion infrared transmitter unit that is adapted to be hand held by the vehicle operator. The transmitter unit includes a programmable encoder for generating, when energized, a coded signal, and a manually-actuated switch connected to the encoder for use by the operator in selectively energizing the encoder to generate and transmit a coded signal.

The receiver unit comprises a programmable decoder which is programed to respond to the coded signal transmitted by the companion transmitter unit. The receiver unit further includes a switching circuit which is connected to respond to the encoder and to control the operation of at least one anti-theft device of the vehicle.

Title "Anti-theft System for a Vehicle"

## Background of the Invention

The present invention relates generally to an anti-theft system for a motor vehicle, and more particularly to such a system which includes a remote control feature.

Numerous prior art anti-theft systems have been described in patents and are on the market. One prior art system includes a locking apparatus adapted both to secure the hood of a motor vehicle and to activate an ignition-disabling electrical switch. When engaged, the locking apparatus prevents access to the "under hood" area of the motor vehicle by means of slide bolt in contact with a keeper which lock the hood closed. The slide bolt and keeper are located under the vehicle's hood, but are controlled from the vehicle passenger compartment by means of a control cable which is connected at its under-hood end to the slide bolt, and at its other end to a manually operated retractable lock. The retractable lock is fitted in a steel casing mounted on or adjacent to the dashboard of the automobile. The anti-theft apparatus is activated by depressing the retractable lock to a closed (locked) position. Depressing the lock also serves to close an electrical switch and activate the circuitry which renders the vehicle's ignition system inoperative. The apparatus is deactivated by using a key in the retractable lock. Another prior art system includes a siren alarm which is activated by a shock or vibration sensor, and this type of system is often combined with the first-mentioned type of system.

While systems as described above have proven to be effective and are commercially successful, they require the use of a special key to deactivate the system. Further, such systems usually include a timing device which inhibits the siren alarm system for a short time after being activated, to enable the vehicle operator to leave and lock the vehicle and also to reenter and deactivate the system. The use of a key lock which must be operated within a brief time period has proven to be an annoyance to many people.

It is a general object of this invention to provide an improved anti-theft system which includes a remote control unit that avoids the need for a key.

Brief Summary of the Invention

A system in accordance with the present invention is for use in a vehicle having at least one anti-theft device such as an ignition suppressor and a siren alarm. The system comprises a receiver unit adapted to be mounted within the passenger compartment of the vehicle, and a companion transmitter unit that is adapted to be hand held by the vehicle operator. The transmitter unit comprises a transmitter circuit for generating, when energized, a coded signal, and a manually-actuated switch connected to the transmitter circuit for use by the operator in selectively energizing the transmitter circuit to generate and transmit a coded signal.

The receiver unit comprises a receiver circuit which is responsive to the coded signal transmitted by the companion transmitter unit. The receiver further includes a switching circuit which is connected to respond to an output signal of the receiver circuit, the output signal appearing when the receiver unit receives a coded signal from the companion transmitter unit. The switching circuit is adapted to be connected to control the operation of at least one anti-theft device of the vehicle.

When leaving the vehicle, the operator actuates the switch on the transmitter unit to effect the generation of a coded signal. This signal is detected by the receiver unit and causes the receiver unit to activate or enable the anti-theft device. Later, before reentering the vehicle, the operator again actuates the transmitter unit to generate another coded signal. The receiver unit responds to the second coded signal and, in response thereto, deactivates or disables the anti-theft device. The operator may then enter and start the vehicle.

In a preferred embodiment of the invention, the coded signal is a digitally coded, infrared light signal. The receiver unit in this instance is mounted within the vehicle compartment at a location where it is able to receive a coded signal through a window of the vehicle.

An alternative embodiment of the invention comprises a transmitter unit and a receiver unit as described, the receiver unit further including circuits for detecting the receipt of invalid signals. An invalid signal is any signal other than the one for which the receiver unit is programed. The receiver unit may include circuitry for sounding an alarm when it detects an invalid signal.

Brief Description of the Drawings

The features of the invention will be better understood from the following detailed description taken in conjunction with the accompanying figures of the drawings, wherein:

Fig. 1 is a fragmentary diagrammatic view of a portion of a vehicle including an anti-theft system in accordance with the present invention;

Fig. 2 is an electrical schematic showing the circuit of a transmitter unit of the system;

Fig. 3 is an electrical schematic showing the circuit of a receiver unit of the system;

Fig. 4 illustrates an alternative form of receiver unit; and

Fig. 5 is a timing diagram for part of the circuit of Fig. 4.

### Detailed Description of the Drawings

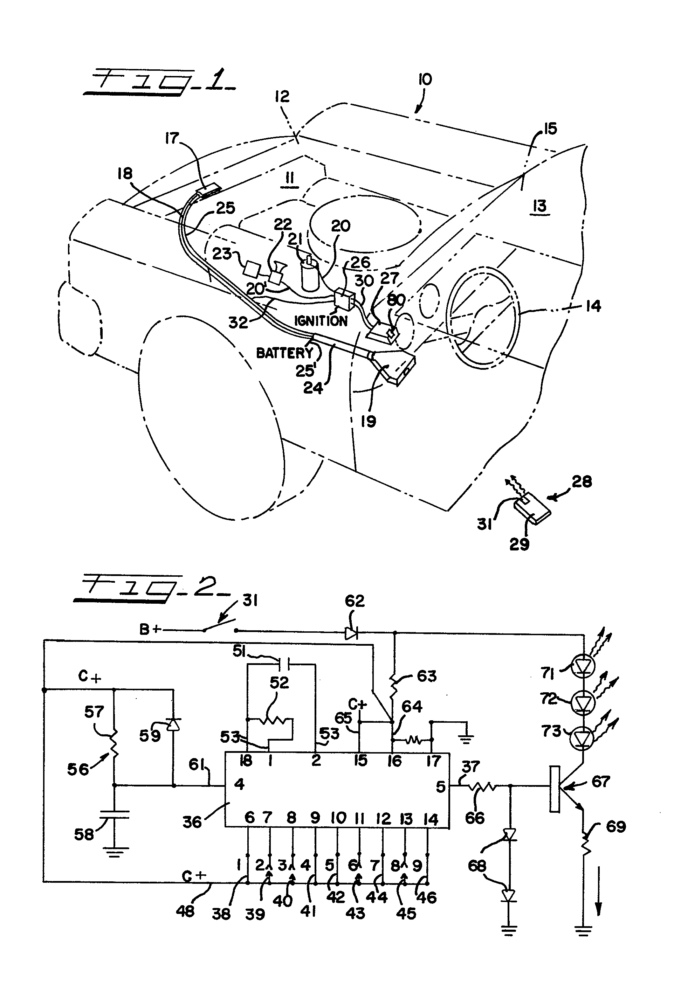

With reference first to Fig. 1, the reference numeral 10 indicates the front portion of a conventional passenger vehicle, and at the forward end of the vehicle is located an engine compartment 11 which is under a hood 12. The vehicle 10 further includes a passenger compartment 13 where the occupants of the vehicle are, of course, seated. The vehicle shown in Fig. 1 includes a conventional steering wheel 14 and a dashboard 15 in front of a vehicle operator (not shown) seated in the passenger compartment 13.

The anti-theft system illustrated in Fig. 1 includes a hood lock 17 formed by a bolt and keeper, the bolt being operated by a cable 18 extending from the lock 17 to a lock control 19 which is normally located underneath the dashboard 15 within the passenger compartment 13. The anti-theft system further includes an ignition suppressor system connected to a part 21 of the engine ignition system by a wire 20, and a siren alarm 22. A motion detector 23 is connected to the siren alarm 22 and, when the siren alarm is activated, energizes the siren alarm 22 when the vehicle is disturbed. In the present illustration, the control 19 is supported by a steel tube 24 that extends through the firewall. Within the steel tube 24 are located the cable 18 to operate the bolt 17, a wire 25 leading from the lock 17 to the control 19, and a wire 25 connected to the control 19 and the battery. The foregoing part of the system has a construction which is well known to those skilled in this art.

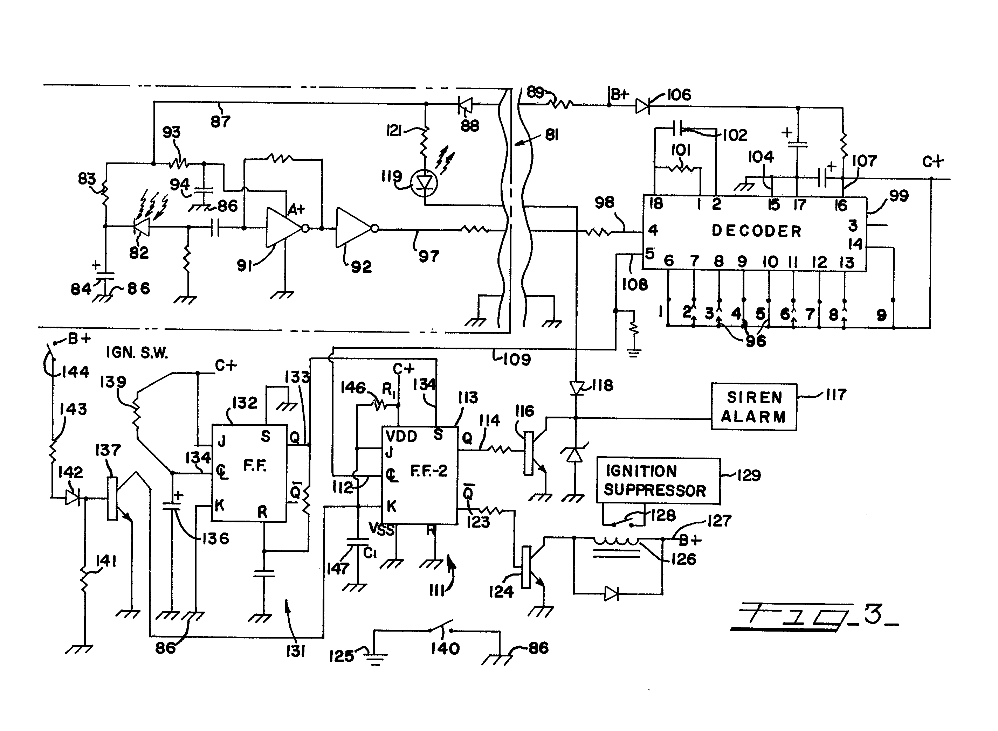

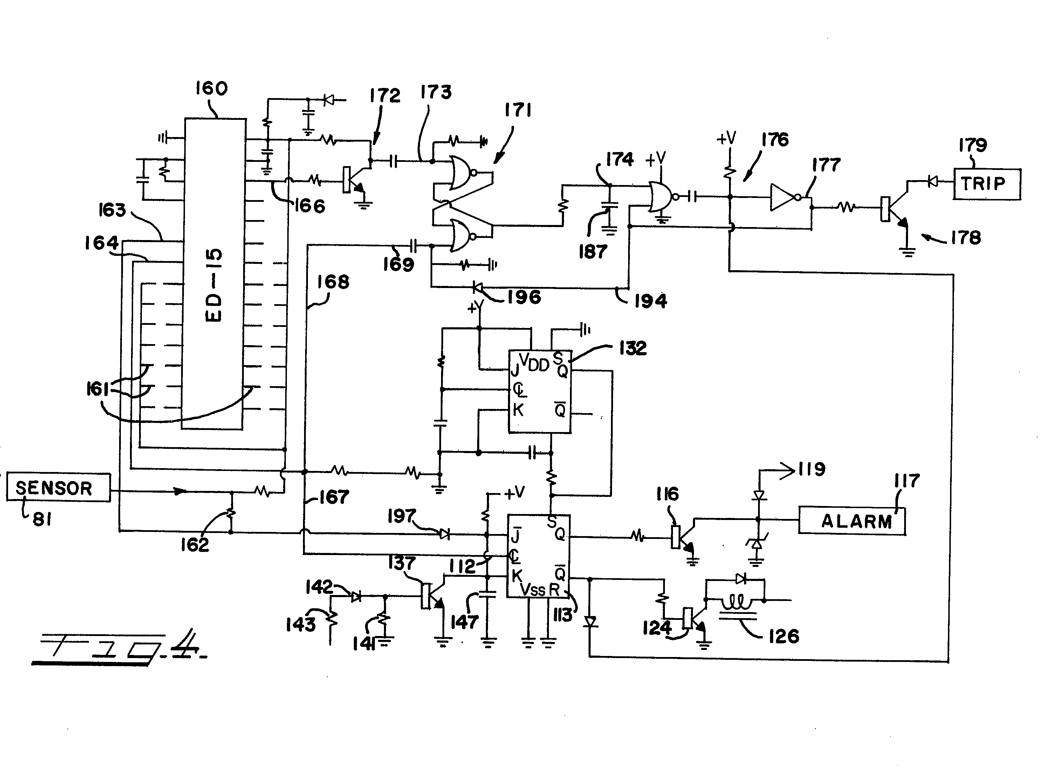

The anti-theft system further includes a receiver unit, the circuitry of this unit being shown in detail in Fig. 3, and a transmitter unit 28, the circuitry for this unit being shown in detail in Fig. 2. The receiver unit includes a casing 27 (Fig. 1) which is in the present specific example of the invention disclosed herein mounted at a location where it may receive infrared radiation or signals through the windows of the vehicle. For example, the casing 27 may be mounted on top of the dashboard 15 adjacent the control 19. Part of the receiver circuitry is in the casing 27 and part in a module 26 within the underhood area, wires 30 extend through a hole in the firewall and connect the receiver 27 with the module 26. The module 26 is connected to the wire 20, to the motion detector alarm by a wire 20', and to the wire 25 by a wire 32.

The transmitter unit 28 includes a portable hand held casing 29 (Fig. 1) for housing the circuit shown in Fig. 2. The unit 28 further includes a push button switch 31, and LEDs of the transmitter extend through openings formed in the casing 29.

The transmitter unit 28 circuitry is shown in Fig. 2 and comprises an encoder chip 36 which generates an output signal in the form of a digital word or data stream on an output line 37. The digital word is controlled by a plurality of coding jumpers, and in the present instance nine jumpers 38 through 46 are provided. Each of the jumpers has one side connected to the encoder chip 36 and its other side connected to a common line 48 which leads to a C+ potential. The particular digital word produced by the encoder chip 36 is determined by the continuity or breaking of one or more of the jumpers 38-46. The jumpers are formed by foil metal strips, and by breaking one or more of the jumpers, the chip 36 is programed to generate different digital words. In the present specific example, the jumpers 39, 40, 43 and 45 have been broken, which will cause a specific digital word to be generated on the output line 37. Since there are a total of nine jumpers, a total of 512 different possible combinations are possible. In the present specific example, the encoder chip 36 is the type manufactured and soild by Supertex, Inc. and designated as their ED-9 Programmable Encoder/Decoder. If it is desired that the chip have the capacity to generate a larger number of possible combinations, a chip such as the Supertex ED-15 may be used, which has fifteen jumpers and 32,768 combinations.

The transmitter circuit further includes a capacitor 51 and a resistor 52 which are connected by three lines 53 to three pins of the encoder chip 36. The encoder includes a clock oscillator, and the values of the capacitor 51 and the resistor 52 determine the frequency of the oscillator.

The encoder chip 36 is initially set up or enabled when power is applied in circuit 56 including a series resistor 57-capacitor 58 circuit connected between the C+ potential on pin 64 and the common or ground. A diode 59 is connected in parallel with the resistor 57 and the juncture of the resistor and the capacitor are connected to an input pin 61 of the encoder. When a positive potential appears on the C+ pin 64, a potential gradually builds up on the pin 61 in the form of a ramp voltage which sets up the encoder chip 36.

The push button switch 31 of the transmitter is connected in series with a diode 62 and a resistor 63 between a B+ supply and a pin 64 of the encoder chip 36. The B+ supply is provided by a battery in the transmitter. When the switch 31 is closed, the encoder chip 36 generates the output signal on the output line 37. A Zener diode (not shown) connected within the chip 36 between the pins 15 and 16 forms the C+ potential at 65, when the switch 31 is closed. The C+ potential appears on the terminal 65 of the chip, and the existence of this potential causes the chip to function as an encoder or generator.

The output line 37 is connected through a resistor 66 to the base of a transistor switch 67. A pair of series connected diodes 68 are connected between the base of the transistor 67 and the ground to limit the magnitude of the signal appearing on the base of the transistor 67. The emitter of the transistor 67 is connected through a resistor 69 to ground, and three series connected diodes 71, 72 and 73 are connected between the collector of the transistor 67 and the junction of the diode 62 with the resistor 63. The diode 71 is an LED which generates light in the visible spectrum. The two diodes 72 and 73, however, are LEDs which generate light in the infrared spectrum.

In the operation of the transmitter, the power is first applied by closing the switch 31 and applying the B+ potential to the leads shown in Fig. 2. The ramp voltage on the pin 61 sets up the encoder 36. When the poush button switch 31 is closed by an operator, the voltage appearing on the pin 64 causes the encoder 36 to generate an output signal in the form of a digital word or data stream on the output lead 37. The data stream comprises a series of pulses, each of which turns on, or biases on, the transistor 67. Each time the transistor 67 is biased on by one of the digital pulses, current flows through the three diodes 71, 72 and 73 from B+ to common. The diode 71 generates a flash of visible light which may be viewed by the operator and indicates to the operator that the transmitter is operating and transmitting a signal. The two LEDs 72 and 73, on the other hand, generate infrared signals in a pattern which correspond to the digital word or data stream from the output 37. The particular digital word is, of course, determined by the pattern of the jumpers 38 through 46 as previously described. The LEDs 71-73 extend through openings in the casing 29, and the infrared signals are detectable from a distance of at least three feet.

The casing of the receiver 27, which may be mounted on the dashboard 15, houses an infrared sensor and a preamplifier circuit contained in sensor block 81 shown in Fig. 3. The infrared sensor comprises a photodiode 82 which is mounted adjacent a window 80 (Fig. 1) formed in the receiver casing. The diode 82 has its cathode connected to the juncture of a resistor 83 and a capacitor 84, these two components being connected in series across a common or ground connection 86 and a positive potential line 87. The line 87 is connected through a diode 88 and a resistor 89 to B+ potential. The preamplifier circuit comprises an op amp 91 and an amplifier 92 which are connected in series to the anode of the diode 82.

The line 87 is also connected through a resistor 93 and a capacitor 94 to the ground potential 86, and the juncture of the resistor 93 and the capacitor is connected to an A+ input of the op amp 91.

The pulses of the output signal produced by the encoder chip 36 of the transmitter and transmitted by the two diodes 72 and 73 is sensed or detected by the photodiode 82, and a corresponding series of digital pulses appears on an output line 97 of the amplifier 92. This output line 97 is connected to an input 98 of a decoder chip 99 which is essentially identical with the encoder chip 36. The chip 99 functions as a decoder, however, because of the circuit connections to the various pins, as will be described. The decoder chip 99 also includes a plurality of jumpers 96 which are broken in the same pattern as the jumpers for the encoder chip 36. As a consequence, the decoder 99 will respond only to a digital word or data stream of the exact type generated by the encoder chip 36. Consequently, the decoder and the encoder may be considered companion elements because they generate and respond to only a single digital word or data stream.

Connected to the decoder chip 99 are a resistor 101 and a capacitor 102 which correspond to the components 52 and 51 shown in Figure 2 and determine the oscillator frequency of the decoder 99, which, of course, is the same as the frequency for the encoder. The decoder chip 99 includes a pin 104 which is connected to the common, whereas the same pin 65 of the encoder is connected to the C+ potential. The presence of the C+ potential on the pin 65 makes the chip 36 a generator or encoder whereas the presence of the common on the pin 104 makes the chip 99 a decoder or receiver.

The B+ potential is also connected through a diode 106 to the decoder chip 99, and the C+ potential is formed on the pin 107 similar to the generation of C+ in the encoder. This pin 107 is also connected to one side of the jumpers 96 and it is at the C+ potential.

An output signal or pulse of the decoder chip 99 appears on a pin 108 when it receives the digital word to which it is programed, and this pin is connected by a line 109 to a switching circuit indicated generally by the reference numeral 111. Consequently when the decoder chip 99 receives a digital word on the input 98 to which it is programed to respond, it generates an output signal on the line 109, and this line is connected to an input pin 112 of a JK flipflop 113. The Q output 114 of the flipflop 113 is connected to the base of a switching transistor 116, and the collector of the transistor 116 is connected to a circuit 117 for activating the siren alarm 22. The collector of the transistor 116 is also connected through a diode 118 to the cathode of an LED 119, the anode of the LED 119 being connected through a resistor 121 to the B+ potential. Thus, when the Q signal appears on the output 114, the transistor 116 is biased on and current flows from B+ through the LED 119, through the diode 118 and through the transistor 116 to the ground connection. The LED 119 is preferably mounted on the case of the receiver 27 part that is on the dashboard and generates light in the visible spectrum so that the vehicle operator is made aware that the decoder chip 99 has received and responded to a signal from the transmitter 28. The circuit components within the block 81 are preferably located within the casing that is on the dash 15 and the remaining receiver components are within the module 26. The wires connecting the two sets of components are in the wire 30 (Fig. 1).

The $\bar{Q}$ output 123 of the flipflop 113 is connected to the base of another switching transistor 124. The collector of the transistor 124 is connected to a relay coil 126, so that when the transistor 124 is biased on, current will flow from a B+ connection 127, through the coil 126 to the transistor 124 and to ground. The contacts 128 of the relay are connected to a circuit 129 for disabling or deactivating the ignition suppression circuit of the alarm system.

The vehicle operator initially activates the system by pressing a button on the control 19 (Fig. 1). This action (operating through the wire 32 in Fig. 1) closes a switch 140 (Fig. 3) which makes a connection between the common line 86 and the vehicle ground 125, thereby activating the receiver unit. Thereafter the system is operated using the remote control or transmitter unit 28. In Fig. 3, the potential B+ may, as a specific example, be 12 volts DC and be derived from the vehicle battery or an independent battery.  The potential C+ is derived at the pin 107 of the decoder 99, as previously mentioned, and may be 6 volts DC.  In operation, the operator leaves the vehicle, locks the doors, aims the transmitter 28 at the receiver unit 27, and presses the button 31.  The transmitter generates a digital word or signal and the LED 71 flashes, signifying that a signal has been sent.  The signal is picked up by the photodiode 82, causing the chip 99 to generate an output signal on the line 109.  This signal "sets" the flipflop 113 and the high signal on the Q output 114 causes the LED 119 to light up, signifying that the receiver has responded to the signal.  The siren alarm 117 is activated or enabled, so that it is able to respond to a turn-on signal from the motion detector 23.  The normally closed relay contacts 128 are closed because of the low signal on the $\bar{Q}$ output, and consequently the ignition suppressor circuit 129 is activated.

When the vehicle operator prepares to reenter the vehicle, he/she first presses the transmitter push button 31 and generates another digital word which is detected by the decoder chip 99.  The chip output signal on the line 109 toggles the flipflop 113.  The low signal on the Q output 114 turns off the LED 119 and deactivates the siren alarm 117.  The high signal on the $\bar{Q}$ output 123 deactivates the ignition suppressor 129.  The operator is then free to leisurely unlock the door and reenter the vehicle.  The operator may at any time, use a key in the control 19 to release the hood lock 17 and thereby open the switch 140 in order, for example, to check the oil level.  The system is later reactivated when the switch 140 is closed.

As an optional part of the system, an automatic actuator circuit 131 (Fig. 3) may be provided to automatically set the flipflop 113 when the anti-theft apparatus is activated by closing the switch 140. The circuit 131 includes another JK flipflop 132 that has its Q output 133 connected to the set input 134 of the flipflop 113. Consequently when the flipflop 132 is toggled, the flipflop 113 will become set and activate the system as though the first signal had been received from the transmitter 28. The input 134 of the flipflop 132 is connected to a capacitor 136 and a resistor 139. The resistor 139 is connected between the input 134 and C+ potential. The capacitor 136 is connected between the input 134 and the common line 86.

When the switch 140 is closed, current then flows from C+, through the resistor 139 and charges capacitor 136. The voltage on the input 134 rises, and after a short time delay determined by the time constant of the capacitor 136 and the resistor 139, the flipflop 132 is switched to its set condition, thereby also setting the flipflop 113 and activating the alarm circuitry as previously described. The opewrator, of course, leaves and locks the vehicle during this time delay. The operator, when returning to the vehicle, uses the transmitter to deactivate the alarm system as previously described.

The receiver unit of Fig. 3 further includes an inhibit circuit which prevents the unit from responding to noise or any other spurious signals while the automobile is being operated. However, it should be kept in mind that the inhibit circuit is optional.

The inhibit circuit includes a resistor 146 and a capacitor 147 connected between C+ potential and common 86. The juncture of this resistor and capactor is connected to the J and K inputs of the F.F. 113. When current flows from C+ through the resistor 146 and the capacitor 147, the capacitor 147 charges and establishes a high input on the J and K inputs, thereby enabling the flipflop 113 to accept signals from the decoder 99 and to turn on or off the associated anti-theft components 117 and 129.

A transistor 137 has its base connected to a resistor 141 and a diode 142 which are connected in series with another resistor 143 and the ignition switch 144. The emitter-collector of the transistor 137 are connected in series with the resistor 146 between C+ and ground. When the ignition switch 144 is off (open), no current flows to the base of transistor 137, it is biased off, and the capacitor 147 is charged as described above. When the switch 144 is closed (ignition is on), current flows through resistor 143 and diode 142, the transistor 137 is biased on and it forms a shunt across the capacitor 147. The capacitor 147 also discharges through the transistor 137, and the J and K inputs of the flipflop 113 are at a low voltage level. In this condition, the flipflop 113 cannot respond to any signals. Consequently, when the ignition is on the system cannot be actuated by noise or any other spurious signals. Of course, the system is again enabled when the ignition switch 144 is again opened.

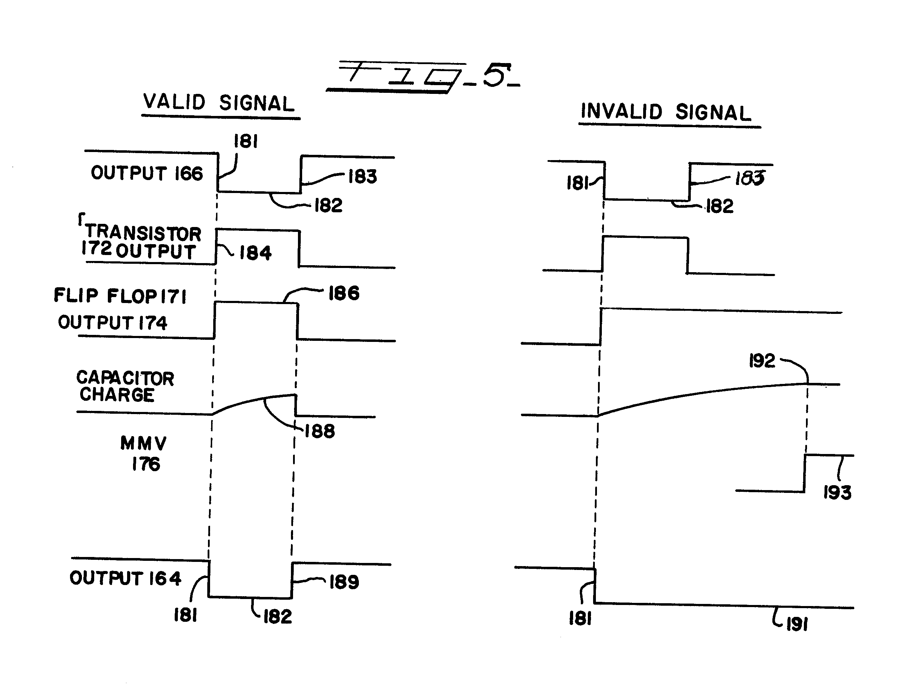

Fig. 4 illustrates a receiver unit including circuits that recognize an invalid coded signal and sound an alarm. By an invalid signal, it is meant a signal having the wrong code for the receiver, or a code with missing pulses. A number of the components in Fig. 4 correspond to components in Fig. 3, and corresponding reference numerals are used for these components.

The unit shown in Fig. 4 includes a decoder 160 which is comparable to the decoder 99 except that it has fifteen jumpers 161 (rather than 9) and therefore has the capability of 32,768 possible codes. The sensor block 81 output is fed through a resistor 162 to an input pin 163 of the decoder 160 which has two output pins 164 and 166. The output pin 164 is connected by a line 167 to the input 112 of the flipflop 113, and it is connected by another line 168 to an input 169 of another flipflop 171.

The signal on the other output pin 166 is inverted by a transistor circuit 172 and is connected to another input 173 of the flipflop 171. An output of the flipflop 171 is connected to an input 174 of a monostable multivibrator (MMV) 176. When output pin 177 of MMV is high, a transistor 178 is biased on and operates a trip 179 for an alarm.

Prior to the time a signal is received from the sensor 81, the outputs 164 and 166 are at high values, and when any signal is received, both outputs simultaneously become low.

With reference to Fig. 5, this transition is indicated by the numeral 181. The low signal 182 exists for, in this specific example, approximately 6 milliseconds and, in the case of a valid signal, both outputs transition to high at time 183. Assuming a valid signal, the positive edge transition 184 at input 173 triggers flipflop 171 and its output 174 becomes a high signal 186. This high voltage 186 starts to charge a capacitor 187 (Fig. 4) as indicated by 188 in Fig. 5. However, at the end of signal 182 of output 164, the positive transition 189 on input 169 of flipflop 171 again triggers it, the output 174 becomes low, and the capacitor 187 stops charging.

In the case of an invalid signal, the signals resulting from the output 166 again occur, but in this instance the output 164 remains low as indicated by 191. Consequently the capacitgor 187 continues to charge and when it reaches potential 192 (after approximately 50 milliseconds), it triggers MMV 176. The signal 193 out of MMV 176 persists for approximately 250 milliseconds and turns on transistor 178 which trips the alarm. Thus the invalid signal alarm is tripped only by receipt of an invalid signal.

The circuit further includes a DC feedback reset signal on a line 194 from output 177, through a diode 196, to the input 169 so as to reset flipflop 171 for another invalid code signal. A diode 197 is also connected between decoder pin 163 and the input 113 to reduce the possibility of spurious signals to the flipflop when the ignition switch is on.

It will be apparent from the foregoing that a novel and useful alarm circuit has been provided. It provides a convenient and easy method of activating and deactivating the vehicle alarm, making it possible to do so without the need for a key or a time period. While part of the receiver circuitry is located in the passenger compartment where it is accessible by breaking into this compartment, the critical components of the receiver are contained within the locked hood area. The critical components are, of course, the decoder and the switching circuit, and they are not readily accessible through a break-in. The system may also include a circuit to sound an alarm in the event the receiver unit detects an invalid signal, to discourage tampering with the system.

In Figure 2, the three horizontal lines representing ground indicates the common of the transmitter chassis. In Figure 3, this symbol represents the vehicle ground, and the symbol including three diagonal lines represents the receiver chassis.

The features disclosed in the foregoing description, in the following claims and/or in the accompanying drawings may, both separately and in any combination thereof, be material for realising the invention in diverse forms thereof.

CLAIMS

1.    An anti-theft device for use with a vehicle, characterised in that the device comprises a portable transmitter, the transmitter comprising programmable encoder means for generating a coded signal, and transmitting means connected to the encoder means and a receiver, the receiver comprising a sensor that is responsive to the coded signal, and programmable decoder means connected to the sensor the encoder means and the decoder means being programmable to the same coded signal, and switch circuit means connected to the decoder means and actuated by the decoder means when the decoder means receives the coded signal to which it is programmed, the switch circuit means being connected to control operation of the device.

2.    A device according to Claim 1, wherein the decoder means and the switch circuit means are adapted to be mounted in an under-bonnet area of the vehicle.

3.    A device according to Claims 1 or 2, wherein the transmitting means generates, and the sensor receives, infrared light signals.

4.    A device according to any of the preceeding claims, wherein the sensor is adapted to be mounted in a passenger compartment of the vehicle and receive signals through a window of the passenger compartment.

5.    A device according to any of the preceding claims, wherein the transmitter further comprises a light connected to the encoder means for indicating the generation of a coded signal and the receiver further comprises a light connected to the switch circuit means, for indicating the receipt of a coded signal.

6.    A device according to any of the preceding claims, wherein the device further comprises circuit means, responsive to the ignition of the vehicle switch, connected to the switch circuit means for deactivating the switch circuit means upon closing of the ignition switch.

7.    A device according to any of the preceding claims, wherein the device further comprises a lock switch adapted to be connected to an operate the device, and time-delay circuit means, connected to the lock switch, and to the switch circuit means, for actuating the switch circuit means after the lock switch has been operated.

8. A device according to any of the preceding claims, wherein the receiver further comprises invalid-signal alarm circuit means, connected to the decoder means, the decoder means further comprising means responsive to an invalid signal for actuating the invalid signal alarm circuit means.

9. A device according to any of the preceding claims further comprising a bonnet lock and/or ingnition suppressor.

10. An anti-theft system for use with a vehicle having an anti-theft device, said system comprising a portable transmitter including programmable encoder means for generating a coded signal, and transmitting said coded signal, said system further comprising a receiver including a sensor that is responsive to said transmitted coded signal, programmable decoder means connected to said sensor and receiving signals from said sensor, said encoder means and said decoder means being programmable to the same coded signal, and switch circuit means connected to said decoder means and actuated by said decoder means when said decoder means receives a coded signal to which it is programmed, said switch circuit means being connected to control operation of said device.

Fig-1

10
12
15
17
11
13
18
25
22 20
21
23 26
20' 30 27
32 80
IGNITION
BATTERY
25'
24
14
19
28
31
29

Fig-2
31
B+
62
51
52
63
C+
57
56 59
64
65
53 53
C+
61
18 1 2 15 16 17
4 5
37
36 66
6 7 8 9 10 11 12 13 14
58
67
C+ 1 2 3 4 5 6 7 8 9
48 38 39 40 41 42 43 44 45 46
68
69
71
72
73

0203262

FIG-3

DECODER

SIREN ALARM

IGNITION SUPPRESSOR

IGN. S.W.

F.F.-2

F.F.

Fig. 4.

$FIG-5-$

VALID SIGNAL

INVALID SIGNAL

OUTPUT 166

TRANSISTOR 172 OUTPUT

FLIP FLOP 171 OUTPUT 174

CAPACITOR CHARGE

MMV 176

OUTPUT 164

0203262